# EUROPEAN PATENT APPLICATION

(11) **EP 3 876 216 A1**
(43) Date of publication of application: **08.09.2021**
(21) Application number: 18941245.5
(22) Date of filing: 28.11.2018
(51) Int. Cl.: G08G 5/00, H04W 84/18

(54) **UNMANNED AERIAL VEHICLE COMMUNICATION SYSTEM AND METHOD**

(71) Applicant: Guangzhou Xaircraft Technology Co., Ltd, Tianhe District Guangzhou, Guangdong 510000 (CN)
(72) Inventor: LIANG, Tianyong, Guangzhou, Guangdong 510000 (CN); PENG, Bin, Guangzhou, Guangdong 510000 (CN); HUANG, Liquan, Guangzhou, Guangdong 510000 (CN)
(74) Representative: Hanna Moore + Curley
(86) International application number: PCT/CN2018/117895
(87) International publication number: WO 2020/107256

(57) **Abstract**

This document discloses a communication system and method for unmanned aerial vehicle. The communication system includes at least one controller, at least one unmanned aerial vehicle and a mesh device. The controller, the unmanned aerial vehicle, and the mesh device serve as mesh nodes, respectively, and the mesh nodes communicate with each other through a mesh network. Technical solutions provided by the embodiments of the present disclosure may reduce transmission power of the controller, increase endurance time of the controller, and reduce an antenna alignment requirement. Therefore, difficulty of operation is reduced, network is flexibly organized, and functions of one controller to multiple unmanned aerial vehicles, multiple controllers to one manned aerial vehicle and multiple controllers to multiple unmanned aerial vehicles may be conveniently realized. A problem of poor communication quality caused by an obstacle between the unmanned aerial vehicle and the controller and a problem of inconvenient expansion of the communication distance may be solved.

## Description

### TECHNICAL FIELD

Embodiments of the present disclosure relate to the field of communication technologies, and in particular to a communication system and a communication method for unmanned aerial vehicle.

### BACKGROUND

With the popularity of unmanned aerial vehicles, more and more people begin to understand and use the unmanned aerial vehicles. The existing unmanned aerial vehicles usually accurately complete some flight tasks, including spraying operations, aerial photography, line patrol, surveying, metering, cargo transportation, and so on, under manual or automatic control.

During a flight operation process of the unmanned aerial vehicle, the unmanned aerial vehicle often needs to communicate with a controller. For example, the controller sends a control signal to control the unmanned aerial vehicle, or the unmanned aerial vehicle feeds back some data to the controller. The controller in related technologies is generally a handheld remote controller. When a distance between the controller and the unmanned aerial vehicle is relatively long, in order to ensure normal communication between the controller and the unmanned aerial vehicle, transmission power of the remote controller is relatively large, easily causing a problem of short endurance time. Moreover, in the related technologies, in order to achieve better communication between the remote controller and the unmanned aerial vehicle, a direction of an antenna of the remote controller needs to be strictly controlled. Therefore, an alignment requirement of the antenna is relatively stricter, and operation requirements are also increased. In addition, in the related technologies, when there is an obstacle between the controller and the unmanned aerial vehicle, communication quality is easily deteriorated, and communication effect is affected.

### SUMMARY

In view of this, in a communication system and method for unmanned aerial vehicle provided by embodiments of the present disclosure, transmission power of a controller is reduced, endurance time of the controller is increased, and an antenna alignment requirement is reduced. Therefore, difficulty of operation is reduced, network is flexibly organized, and functions of one controller to multiple unmanned aerial vehicles and multiple controllers to one manned aerial vehicle may be conveniently realized. A problem of poor communication quality caused by an obstacle between the unmanned aerial vehicle and the controller and a problem of inconvenient expansion of the communication distance may be solved.

The embodiments of the present disclosure provide a communication system for unmanned aerial vehicle. The communication system includes at least one controller, at least one unmanned aerial vehicle and a mesh device.

The controller, the unmanned aerial vehicle and the mesh device may serve as mesh nodes, respectively, and the mesh nodes communicate with each other through a mesh network.

The embodiments of the present disclosure provide a communication system for unmanned aerial vehicle. The communication system includes at least one controller, at least one unmanned aerial vehicle and another device.

The controller communicates with the another device through a mesh network, and the another device and the unmanned aerial vehicle form a star network.

A communication method unmanned aerial vehicle provided by the embodiments of the present disclosure includes:

sending, by a controller, a control signal for controlling an unmanned aerial vehicle through a mesh network; or receiving, by the controller, feedback data of the unmanned aerial vehicle through the mesh network, and processing the feedback data.

A communication method unmanned aerial vehicle provided by the embodiments of the present disclosure includes:
receiving, by a mesh device, through a mesh network, a control signal sent by a controller, and forwarding the control signal to an unmanned aerial vehicle; or
receiving, by the mesh device, through the mesh network, feedback data sent by the unmanned aerial vehicle, and forwarding the feedback data to the controller.

A communication method unmanned aerial vehicle provided by the embodiments of the present disclosure includes:
receiving, by an unmanned aerial vehicle, through a mesh network, a control signal forwarded by a mesh device, and performing a corresponding operation according to the control signal; or
sending, by the unmanned aerial vehicle, feedback data through the mesh network.

A communication method unmanned aerial vehicle provided by the embodiments of the present disclosure includes:
sending, by a controller, a control signal for controlling an unmanned aerial vehicle, or receiving feedback data of the unmanned aerial vehicle and processing the feedback data;
forwarding, by a mesh device, the control signal or the feedback data; and
receiving, by the unmanned aerial vehicle, the control signal forwarded by the mesh device and performing a corresponding operation according to the control signal, or sending the feedback data.

The controller, the unmanned aerial vehicle and the mesh device serve as mesh nodes, respectively, and the mesh nodes communicate with each other through a mesh network.

### BRIEF DESCRIPTION OF DRAWINGS

FIG. 1 is a schematic structural diagram of a communication system for unmanned aerial vehicle according to an embodiment of the present disclosure.
FIG. 2 is a schematic structural diagram of a communication system for unmanned aerial vehicle according to an embodiment of the present disclosure.
FIG. 3 is a schematic structural diagram of a communication system for unmanned aerial vehicle according to an embodiment of the present disclosure.
FIG. 4 is a schematic structural diagram of a communication system for unmanned aerial vehicle according to an embodiment of the present disclosure.
FIG. 5 is a schematic structural diagram of a communication system for unmanned aerial vehicle according to an embodiment of the present disclosure.
FIG. 6 is a schematic structural diagram of a communication system for unmanned aerial vehicle according to an embodiment of the present disclosure.
FIG. 7 is a schematic structural diagram of a communication system for unmanned aerial vehicle according to an embodiment of the present disclosure.
FIG. 8 is a schematic structural diagram of a communication system for unmanned aerial vehicle according to an embodiment of the present disclosure.
FIG. 9 is a schematic structural diagram of a communication system for unmanned aerial vehicle according to an embodiment of the present disclosure.
FIG. 10 is a schematic structural diagram of a communication system for unmanned aerial vehicle according to an embodiment of the present disclosure.
FIG. 11 is a schematic structural diagram of a communication system for unmanned aerial vehicle according to an embodiment of the present disclosure.
FIG. 12 is a flowchart of a communication method for unmanned aerial vehicle according to an embodiment of the present disclosure.

### DETAILED DESCRIPTION OF THE EMBODIMENTS

The present disclosure will be further described in detail below with reference to accompanying drawings and embodiments. It may be understood that the specific embodiments described herein are only used to explain the present disclosure, rather than limiting the present disclosure. In addition, it may be noted that for ease of description, the accompanying drawings only show a part of the structure related to the present disclosure, rather than all the structure.

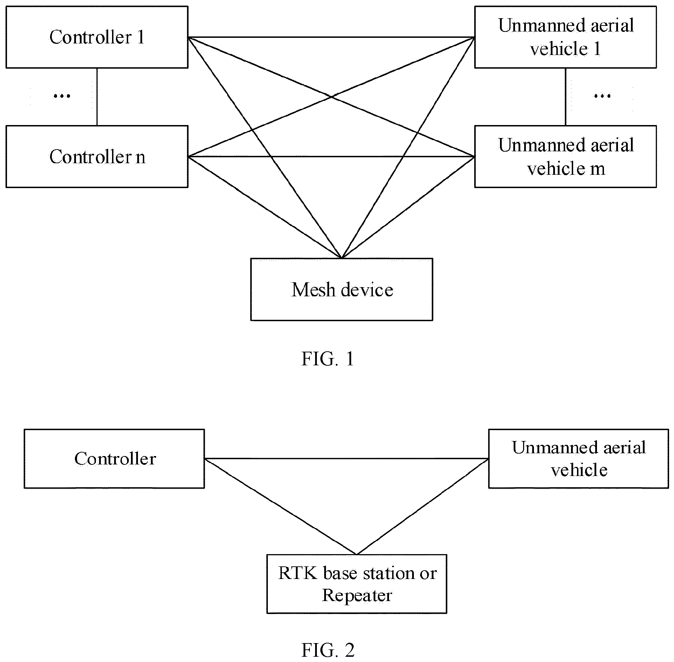

FIG. 1 is a schematic structural diagram of a communication system for unmanned aerial vehicle according to an embodiment of the present disclosure. The communication system for unmanned aerial vehicle may be applied in general scenarios of unmanned aerial vehicle communication flight. Optionally, the system may be applied in scenarios of plant protection operations of an unmanned aerial vehicle, such as a scenario of spraying pesticides.

The communication system for unmanned aerial vehicle provided by the embodiments of the present disclosure may be applied in the following scenarios. For example, a controller in related technologies is generally a handheld remote controller. When a distance between the controller and the unmanned aerial vehicle is relatively long, in order to ensure normal communication between the controller and the unmanned aerial vehicle, transmission power of the remote controller is relatively large, so as to easily cause a problem of short endurance time. Moreover, in the related technologies, in order to achieve better communication between the remote controller and the unmanned aerial vehicle, a direction of an antenna of the remote controller needs to be strictly controlled. Therefore, an alignment requirement of the antenna is relatively strict, and operation requirements are increased. As another example, a communication architecture of the unmanned aerial vehicle is a star network with the controller as a center. For example, the controller directly communicates with several unmanned aerial vehicles, or indirectly communicates with the unmanned aerial vehicles through a main controller. When the unmanned aerial vehicle is flying, there may be an obstacle between the controller and the unmanned aerial vehicle, and the obstacle may easily lead to poor communication quality between the controller and the unmanned aerial vehicle. Optionally, in a process of the plant protection operation of the unmanned aerial vehicle, there may be corns, sunflowers, trees or undulating terrain between the controller and the unmanned aerial vehicle, resulting in the poor communication quality between the controller and the unmanned aerial vehicle, especially when the unmanned aerial vehicle is flying at a low altitude. When the unmanned aerial vehicle flies far away, since an inclination angle between the unmanned aerial vehicle and the controller becomes smaller, the communication between the controller and the unmanned aerial vehicle is more susceptible to the obstacle. Therefore, in the communication system for unmanned aerial vehicle system provided by the embodiments of the present disclosure, since a mesh device is added into the system, and the mesh device, the unmanned aerial vehicle and the controller communicate with each other through a mesh network, the transmission power of the controller may be reduced, and the endurance time of the controller may be increased. In addition, the alignment requirement of the antenna may be reduced, thereby reducing difficulty of the operation. Furthermore, functions of one controller to multiple unmanned aerial vehicles, multiple controllers to one unmanned aerial vehicle, and multiple controllers to multiple unmanned aerial vehicles may be realized conveniently by flexibly networking. A problem of the poor communication quality caused by the obstacle between the unmanned aerial vehicle and the controller may be solved, and a problem that the communication quality gradually deteriorates due to the obstacle between the unmanned aerial vehicle and the controller may be solved.

As shown in FIG. 1, the communication system for unmanned aerial vehicle provided by the embodiment of the present disclosure includes at least one controller, at least one unmanned aerial vehicle and a mesh device. The at least one controller, the at least one unmanned aerial vehicle and the mesh device serve as mesh nodes, respectively, and the mesh nodes communicate with each other at least through a mesh network in a form of a wireless network. The controller is used for sending a control signal for controlling the unmanned aerial vehicle, or receiving feedback data of the unmanned aerial vehicle and processing the feedback data. The mesh device is used for forwarding the control signal or the feedback data. The mesh device may be a device that supports a mesh function.

Optionally, the mesh device includes at least one of an unmanned aerial vehicle, a controller, a repeater and a RTK base station. The RTK base station has functions of broadcasting auxiliary information for high-precision positioning, routing and forwarding, and may also be used as a repeater at the same time. In practice, since an erection height of the RTK base station is high, the RTK base station may usually be used as a repeater. When the mesh device is the RTK base station, compared to other mesh devices, the RTK base station may receive a satellite signal, decode the satellite signal to generate measurement information, and broadcast the measurement information to the unmanned aerial vehicle. The unmanned aerial vehicle can improve positioning accuracy by using the measurement information sent by the RTK base station, thereby realizing flexible communication. It may be noted that, in addition to a relay and forwarding function, the RTK base station may also directly send data, such as the measurement information generated by the RTK base station itself, to the controller or the unmanned aerial vehicle. For example, the RTK base station directly sends data to the controller, so that the controller may monitor a status of the RTK base station. As another example, the RTK base station directly sends data to the unmanned aerial vehicle, so as to improve navigation accuracy of the unmanned aerial vehicle. Of course, the RTK base station, as one mesh node in the mesh network, may also send data to the target unmanned aerial vehicle or the controller through the other mesh nodes. The other mesh nodes may be the controllers, the unmanned aerial vehicles, the repeaters or other RTK base stations, so as to expand a communication distance between the RTK base station and the target unmanned aerial vehicle or the controller. Similarly, the above two cases are also applicable to any mesh node in the mesh network.

In a case of autonomous flight of the unmanned aerial vehicles, in order to achieve one controller to control multiple unmanned aerial vehicles to achieve high efficiency of operation, the communication system for unmanned aerial vehicle is required to support one-to-many communication. In order to achieve complex and accurate control, in some cases, multiple controllers are required to control a same unmanned aerial vehicle. For example, some controllers control a flight attitude, and some controllers control sensors to collect data. Therefore, the communication system for unmanned aerial vehicle is required to support many-to-one communication. As another example, in some cases, multiple controllers are required to control multiple unmanned aerial vehicles, so that the communication system for unmanned aerial vehicle is required to support many-to-many communication. In technical solutions provided by the embodiments of the present disclosure, the communication system for unmanned aerial vehicle includes the at least one controller, the at least one unmanned aerial vehicle and the mesh device, and the at least one controller, the at least one unmanned aerial vehicle and the mesh device communicate through the mesh network. By using flexibility of the mesh network, the controller, the unmanned aerial vehicle and the mesh may be used as the mesh nodes respectively. Therefore, the unmanned aerial vehicle, the controller or the mesh device may be easily added or reduced, so as to realize the functions of one controller to multiple unmanned aerial vehicles, multiple controllers to one manned aerial vehicle, and multiple controllers to multiple unmanned aerial vehicles.

In the related technologies, when a dedicated relay device needs to be added, a configuration operation is usually required, and it is difficult for the dedicated relay device to be used immediately after power on. Therefore, the mesh device provided in the embodiments of the present disclosure includes at least one of devices having a mesh function, such as a controller, an unmanned aerial vehicle, a RTK base station and a repeater. When a mesh device needs to be added, a cumbersome step such as configuration may be avoided, and the mesh device may be used immediately after power on, so as to be convenient for a user and improve use efficiency.

In the related technologies, in order to support long-distance communication, an antenna of the controller is required to have large gain. Therefore, a length of the antenna is required to be matched with a carrier wavelength, thereby making the antenna larger in volume or length, and at the same time, requiring the antenna with a suitable shape. However, the controller is generally in a handheld form. For example, since the handheld remote control has restrictions on the shape and volume of the antenna, the handheld remote controller to be unable to use a better antenna. Moreover, when the distance between the handheld remote controller and the unmanned aerial vehicle is relatively long, the transmission power of the remote controller is relatively large, thereby easily causing the problem of short endurance time. The wireless communication system provided by the embodiments of the present disclosure may forward communication data between the controller and the unmanned aerial vehicle through the mesh device. When the distance between the controller and the unmanned aerial vehicle is long, the controller may communicate with the mesh device, thereby reducing power consumption of the controller, increasing the endurance time, and reducing the gain of the controller to reduce requirements on the volume of the controller and battery capacity. Therefore, in an implementation mode according to the embodiments of the present disclosure, transmission power of different types of the mesh nodes may be different. Optionally, the transmission power of the controller is less than a first set power threshold, the transmission power of the unmanned aerial vehicle and/or the mesh device is greater than a second set power threshold, and the first set power threshold is less than the second set power threshold. It may be noted that the first set power threshold and the second set power threshold may be set according to actual needs rather than fixed values. In other words, the transmission power of the controller may be small, while the transmission power of the mesh device or the unmanned aerial vehicle may be large. The controller and the mesh device, such as the RTK base station and the repeater, form a first hop link, and the communication distance may be close. The mesh device and the unmanned aerial vehicle form a second hop link, and the communication distance may be long due to the large transmission power. Therefore, by using characteristics of the mesh network, the remote controller may use the mesh device as a relay node, so as to communicate with the unmanned aerial vehicle over a long distance.

In most cases, the transmission power of the mesh nodes determines the communication distances between the mesh nodes. A relay node can be added instead of increasing the transmission power, thereby facilitating operations and solving a problem of convenience of extending the communication distances. For example, each hop link may achieve a communication distance of 1 km, so that N hops may achieve a communication distance of N*1 km. Each mesh device may be used as a relay node, a dedicated relay device is not necessary.

In the related technologies, in order to achieve the better communication between the controller and the unmanned aerial vehicle, a direction of an antenna device of the controller is required to be strictly controlled, thereby requiring a higher requirement on an operating posture. The embodiments of the present disclosure provide the mesh device, and the device nodes communicate through the mesh network. The controller and the unmanned aerial vehicle may communicate through the mesh device, and an appropriate communication path may be selected by a mesh network mechanism. Therefore, the direction of the antenna device of the controller is not required, and the operating posture may also be selected according to comfort of a user to facilitate an operation of the user. In an implementation mode according to the embodiments of the present disclosure, the antenna devices of different types of the mesh nodes are different. Optionally, the gain of the antenna device of the controller is less than a first set gain value, the gain of the antenna device of the unmanned aerial vehicle and/or the mesh device is greater than a second set gain value, and the first set gain value is less than the second set gain value. It may be noted that the first set gain value and the second set gain value may be set according to specific requirements. Optionally, the antenna device of the controller is an omnidirectional antenna. The antenna device of the controller may have smaller gain. Since requirements on elevation angles of the antenna devices of the unmanned aerial vehicle and the mesh device are not strict, the antenna devices of the unmanned aerial vehicle and the mesh device may have larger gain, and thus the communication distance between the unmanned aerial vehicle and the mesh device, such as a RTK base station or a repeater, is relatively long. Therefore, by controlling the antenna devices of the mesh nodes, and reducing a restriction on the gain of the antenna devices, design of the antennas is more in line with overall appearance and structure requirements. Moreover, manufacturing cost of the antenna device of the controller and cost of the communication system for unmanned aerial vehicle are reduced.

In the related technologies, a communication system for unmanned aerial vehicle is a star network with a controller as a center. That is, the controller communicates with multiple unmanned aerial vehicles respectively, or the controller communicates with multiple unmanned aerial vehicles through a main controller. However, when the system for unmanned aerial vehicle communication in the related technologies is adopted, if there is an obstacle between the controller and the unmanned aerial vehicle, communication quality between the controller and the unmanned aerial vehicle may be deteriorated. Therefore, the embodiments of the present disclosure provide the mesh device, and the mesh device, the controller and the unmanned aerial vehicle communicate through the mesh network. When there is an obstacle between the controller and the unmanned aerial vehicle, the controller and the unmanned aerial vehicle may communicate indirectly through the mesh device. In the mesh network including the controller, the unmanned aerial vehicle and the mesh device, each device node may also automatically select a communication path, thereby avoiding the obstacle to forward data for realizing the communication between the controller and the unmanned aerial vehicle. Therefore, technical solutions provided by the embodiments of the present disclosure may solve a problem of poor communication quality caused by the obstacle between the controller and the unmanned aerial vehicle.

Specifically, the controller may select an appropriate path by using a path discovery algorithm. For example, when the controller cannot detect a specific signal of the unmanned aerial vehicle or the detected specific signal is less than a certain power threshold, the controller asks a neighbor node whether the neighbor node can communicate with the target unmanned aerial vehicle, and so on. If the network is deployed properly, the controller may find the appropriate path to communicate with the unmanned aerial vehicle. For example, if there is an obstacle between the controller and the unmanned aerial vehicle, the controller may not directly communicate with the unmanned aerial vehicle, and the controller may indirectly communicate with the target unmanned aerial vehicle through neighbor A (that is, the neighboring mesh node A). The controller and the neighbor A form a first hop link, and the neighbor A and the unmanned aerial vehicle form a second hop link. Similarly, if the unmanned aerial vehicle feeds back data to the controller, a way of determining a communication path may be the same as a way of determining a communication path by the controller. In the embodiments of the present disclosure, the mesh network may also be referred to as a multi-hop network with a flexible network architecture and characteristics such as self-discovery, self-organizing network and automatic routing. Therefore, the mesh network is convenient to use, and a device can be easily added or reduced in the mesh network. The controller may be a ground control device in a form of a ground station, a remote controller, a smart phone, a back clip, and so on.

In an implementation mode according to the embodiments of the present disclosure, optionally, heights of the mesh nodes are different. When there is an obstacle between the controller and the unmanned aerial vehicle, a height of the mesh device is greater than a height of the obstacle. Since there is the obstacle between the controller and the unmanned aerial vehicle, and the height of the mesh device is greater than the height of the obstacle, a problem of affecting the communication between the controller and the mesh device and the communication between the mesh device and the unmanned aerial vehicle may be avoided. Therefore, a problem that the communication quality is affected when there is the obstacle between the controller and unmanned aerial vehicle is solved.

Optionally, the controller is usually set on the ground and is easily blocked by obstacles. The mesh device, such as a RTK base station or other mesh devices, may be erected at a high height. For example, the mesh device may be erected by a bracket. The unmanned aerial vehicle is located above crops during an operation, and the height of the unmanned aerial vehicle is also high. Therefore, the mesh device and the unmanned aerial vehicle are both high in height, usually without obstacles, and have a long communication distance. The controller, the mesh device and the unmanned aerial vehicle communicate through the mesh network. With the characteristics of the mesh network, the controller may use the mesh device as a relay node, so as to communicate with the unmanned aerial vehicle over a long distance. In the same way, the controller may use another mesh device as a relay node and take advantage of a height characteristic of the mesh device to communicate with the unmanned aerial vehicle over a long distance. If an unmanned aerial vehicle is used as a relay node, the unmanned aerial vehicle may fly to a position where the unmanned aerial vehicle may bypass an obstacle. The obstacle may be a hillside or a forest.

In an implementation mode according to the embodiments of the present disclosure, optionally, as shown in FIG. 1, the number of the at least one controller is at least two, and the number of the at least one unmanned aerial vehicle is at least two. The mesh device may be the RTK base station or the repeater. By setting the number of the at least one controller to at least two and the number of the at least one unmanned aerial vehicle to at least two, the multiple controllers may be implemented to control the multiple unmanned aerial vehicles.

In an implementation mode according to the embodiments of the present disclosure, optionally, the number of the at least one controller is one, and the number of the at least one unmanned aerial vehicle is one. The mesh device may be the RTK base station or the repeater. Therefore, one controller may be implemented to control one unmanned aerial vehicle. As shown in FIG. 2, the number of controllers is one, the number of unmanned aerial vehicles is one, and the number of mesh devices is one. The mesh device may be a RTK base station or a repeater. The controller, the mesh device and the unmanned aerial vehicle communicate through a mesh network. The controller and the unmanned aerial vehicle may directly communicate with each other, or the controller and the unmanned aerial vehicle may communicate with each other by using the mesh device, such as the RTK base station or the repeater, as a relay node.

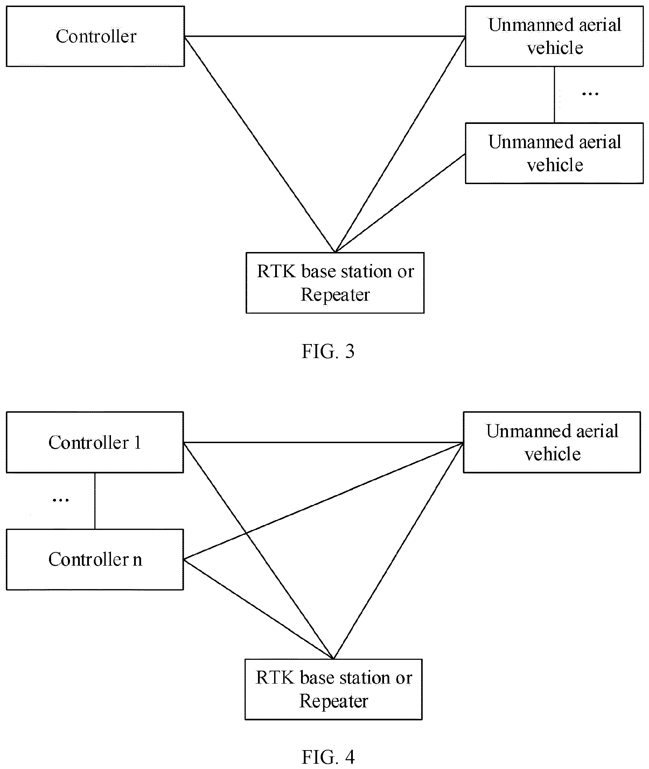

In an implementation mode according to the embodiments of the present disclosure, optionally, the number of the at least one controller is one, and the number of the at least one unmanned aerial vehicle is at least two. The mesh device may be the RTK base station or the repeater. Therefore, one controller may be implemented to control multiple unmanned aerial vehicles. As shown in FIG. 3, the number of controllers is one, and the number of unmanned aerial vehicles is at least two. The mesh device may be a RTK base station or a repeater. The controller may directly communicate with each unmanned aerial vehicle to control a controllable device, such as a cloud platform, on the unmanned aerial vehicle. Optionally, the controller may indirectly communicate with the unmanned aerial vehicle by using the RTK base station or the repeater as a relay node.

In an implementation mode according to the embodiments of the present disclosure, optionally, the number of the at least one controller is at least two, and the number of the at least one unmanned aerial vehicle is one. The mesh device may be the RTK base station or the repeater. Therefore, multiple controllers may be implemented to control one unmanned aerial vehicle. As shown in FIG. 4, the number of controllers is at least two, the number of unmanned aerial vehicles is one, and the number of mesh devices is one. The mesh device may be a RTK base station or a repeater. The multiple controllers may directly communicate with the unmanned aerial vehicle to control a controllable device, such as a cloud platform, on the unmanned aerial vehicle. Optionally, the multiple controllers may indirectly communicate with the unmanned aerial vehicle by using the RTK base station or the repeater as a relay node.

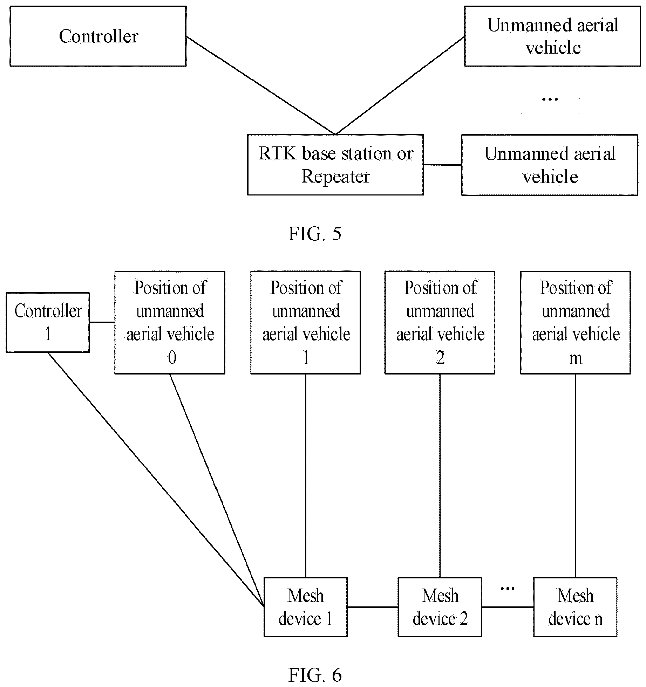

In an implementation mode according to the embodiments of the present disclosure, the wireless communication system may be applied in a two hop relay scenario. As shown in FIG. 5, optionally, a mesh device may be a RTK base station or a repeater. A controller may indirectly communicate with unmanned aerial vehicles by using the RTK base station or a dedicated repeater as a relay node. The unmanned aerial vehicles, the mesh device and the unmanned aerial vehicle communicate through a mesh network, that is, device nodes form a pure mesh network. Each device in FIG. 5 may be a mesh node, and there is a peer-to-peer relationship between the mesh nodes. Each mesh node may directly communicate with a neighbor node. When in a specific coverage area, all the mesh nodes may also be connected in a single hop, that is, direct communication. When there is no condition of single hop connection, a meshed multi-hop network may be formed.

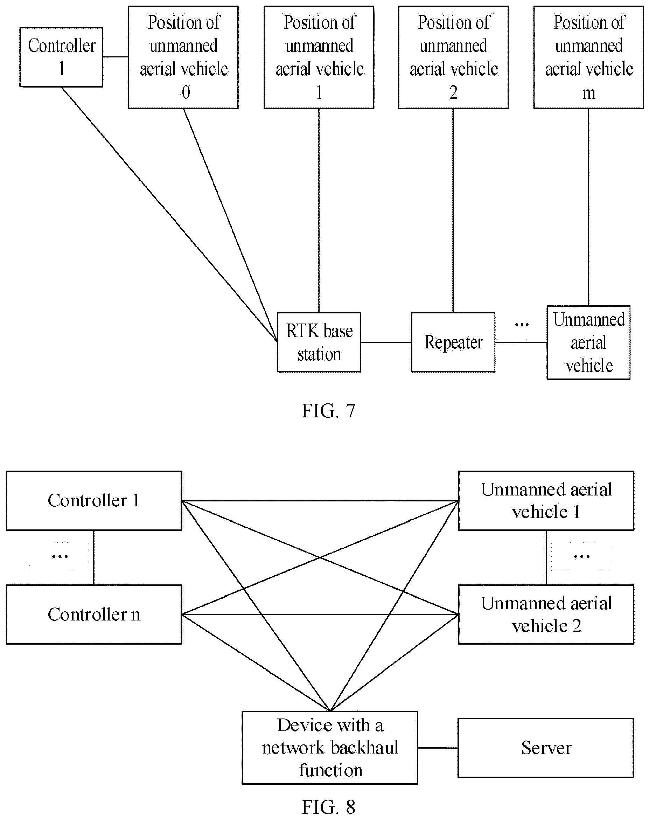

In an implementation mode according to the embodiments of the present disclosure, optionally, the wireless communication system may be applied in a multi-hop relay scenario. Optionally, the number of the at least one controller is one, the number of the at least one unmanned aerial vehicle is one, and the number of the mesh device is at least three. For example, as shown in FIG. 6, n relay nodes are deployed in the wireless communication system. That is, the n relay nodes may be mesh devices with a relay function. The mesh devices may be devices with a function of implementing data routing and forwarding. The mesh devices may be controllers, unmanned aerial vehicles, RTK base stations or repeaters. The controller, the unmanned aerial vehicle and the mesh devices may be used as device nodes, and the device nodes communicate with each other through the mesh network. When a position of the unmanned aerial vehicle changes from position 0 to position m, a routing mechanism of the mesh network may select an appropriate relay node and an appropriate communication path to greatly expand wireless signal coverage. For example, when the unmanned aerial vehicle is at the position 0, the controller may directly communicate with the unmanned aerial vehicle. When the unmanned aerial vehicle is at position 1, the controller may indirectly communicate with the unmanned aerial vehicle through the mesh device 1. When the unmanned aerial vehicle is at position 2, the controller and the unmanned aerial vehicle may communicate with each other through the mesh device 1 and the mesh device 2 in turn. Optionally, as shown in FIG. 7, the mesh device 1 may be a RTK base station, the mesh device 2 may be a repeater, and the mesh device 3 may be an unmanned aerial vehicle.

In an implementation mode according to the embodiments of the present disclosure, optionally, at least one of the unmanned aerial vehicle, the controller and the mesh device is a device with a network backhaul function. The device with the network backhaul function is configured to receive an access request from another device and access a server according to the access request, and forward feedback data of the server to the another device. The another device may be any device in the system except the device with the network function. Optionally, a mesh device being the device with the network backhaul function is taken as an example. As shown in FIG. 8, the device with the network backhaul function not only supports a mesh function, but also has a backhaul link. The backhaul link may be a wired backhaul link or a wireless backhaul link, such as a 4G wireless communication network and an asymmetric digital subscriber line (ADSL) network. The device is configured to receive an access request from the controllers or the unmanned aerial vehicles, access the server according to the access request, and forward data fed back by the server to the controllers or the unmanned aerial vehicles. The server may be a cloud server or other servers. The device may access the Internet or a dedicated private cloud network through the backhaul link, and other mesh nodes may indirectly access the Internet or the private cloud network through the device with the backhaul function.

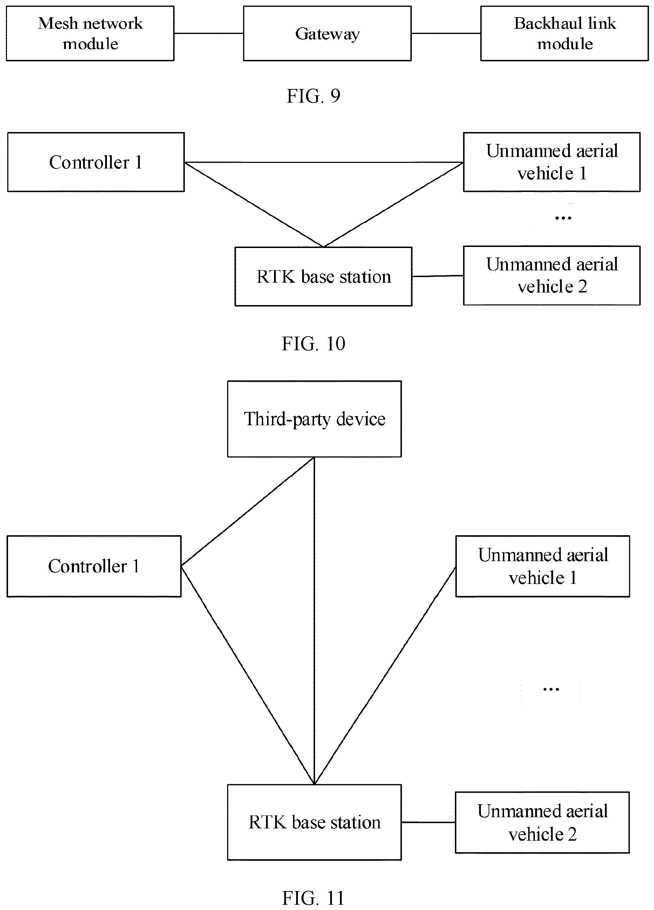

Optionally, as shown in FIG. 9, a device with a network backhaul function includes a mesh network module, a gateway and a backhaul link module (a Portal module). The backhaul link module may include a backhaul link. The backhaul link may be a wired backhaul link or a wireless backhaul link, such as a 4G wireless communication network and a non-ADSL network, etc. The gateway is configured to route and forward data between the mesh network module and the backhaul link module, so as to realize data conversion between the mesh network and a cloud network.

At least one of the unmanned aerial vehicle, the controller and the mesh device is the device with the network backhaul function, that is, may also include the gateway and the backhaul link module in addition to the mesh function. The other devices may bidirectionally access the cloud network through the device with the backhaul function. Therefore, by setting at least one of the mesh device, the controller and the unmanned aerial vehicle to be the device with the backhaul function, and the device with the backhaul function communicating with the other devices through the mesh network, other device nodes may access the network through the device with the backhaul function to conveniently get more information from the Internet. Convenience and versatility of the wireless communication system are improved, and an operation parameter and an operation status can be obtained from a server and submitted to another server. In addition, remote monitoring of an unmanned aerial vehicle operation system may be realized.

A communication system for unmanned aerial vehicle is provided by the embodiments of the present disclosure. The system includes at least one controller, at least one unmanned aerial vehicle and another device. The controller communicates with the another device through a mesh network, and the another device and the at least one unmanned aerial vehicle form a star network. Optionally, the another device may include at least one of a RTK base station, an unmanned aerial vehicle, a repeater and a controller. Optionally, the another device may be a device with a mesh function and an access point (AP) function. The unmanned aerial vehicle has a station (STA) function.

In the embodiments of the present disclosure, a relay and forwarding function of some devices may be limited as needed. In an implementation mode according to the embodiments of the present disclosure, optionally, the number of the controllers is one, the number of the unmanned aerial vehicles is at least two, and the number of the other devices is one. Optionally, as shown in FIG. 10, the number of the controllers is one, the number of the unmanned aerial vehicles is at least two, and the other devices include a RTK base station. The controller and the RTK base station may communicate through a mesh network. The RTK base station and the unmanned aerial vehicles may communicate through a star network. At this time, the relay and forwarding function of the unmanned aerial vehicles is limited. The RTK base station not only has a mesh network function, but also has an access point (AP) function. The RTK base station may use the 802.11 protocol family related technologies to communicate with the controller. By using the AP function of the RTK base station, a wired network may be converted into a WiFi wireless signal for the controller or the unmanned aerial vehicles and the other devices to connect. The unmanned aerial vehicles may have a station (STA) function. All unmanned aerial vehicles form the star network centered on the RTK base station or the repeater. The controller indirectly communicates through the RTK base station or the repeater.

The star network is formed by using a center device to connect many points, that is, each device in the network is connected with the center device to form the star network. AP is a creator of a wireless network, and may be a center node of the wireless network. STA refers to a station. Each device connected to the wireless network may be called the station.

When the number of the mesh nodes is large, complexity of the network may be increased and consumption may also be increased, thereby reducing network performance. A device located in a critical path may be equipped with a mesh function, and a key device with the mesh function is taken as a center device. The center device and devices located in non-critical paths form a star network to achieve a more reasonable network architecture, so as to improve the network performance. In other words, by using a hybrid network (the mesh network and the star network) between the controller, the other devices and the unmanned aerial vehicles, the network performance may be improved and data transmission efficiency may be improved.

In the embodiments of the present disclosure, the wireless communication system may also include a third-party device with a mesh function. The third-party device, the controller and the other devices communicate through the mesh network. As shown in FIG. 11, optionally, the number of controllers is one, the number of unmanned aerial vehicles is multiple, and the other devices may be a RTK base station. The third-party device, the controller and the RTK base station communicate with each other through a mesh network, and the RTK base station and the unmanned aerial vehicles communicate through a star network. Optionally, the third-party device may be a surveying and mapping device. For example, the surveying and mapping device may measure farmland, etc., and the surveying and mapping device, the controller and the unmanned aerial vehicles may interact with each other.

It may be noted that the embodiment of the present disclosure shown in FIG. 11 exemplarily illustrates a communication mode among the third-party device, the controller, the mesh device and the unmanned aerial vehicles. However, the communication mode among the third-party device, the controller, the mesh device and the unmanned aerial vehicles is not limited to the communication mode illustrated in FIG. 11. The third-party device, the controller, the mesh device and the unmanned aerial vehicles may also communicate with each other through a mesh network.

A communication method for unmanned aerial vehicle provided by the embodiments of the present disclosure includes: sending, by a controller, a control signal for controlling an unmanned aerial vehicle through a mesh network, or receiving, by the controller, feedback data of the unmanned aerial vehicle through the mesh network, and processing the feedback data.

As a result, the controller may send the control signal or receive the data through the mesh network, and be flexibly networked with the other devices, so as to facilitate the communication system to realize functions of one controller to multiple unmanned aerial vehicles and multiple controllers to one unmanned aerial vehicle.

A communication method for unmanned aerial vehicle provided by the embodiments of the present disclosure includes: receiving, by a mesh device, through a mesh network, a control signal sent by a controller, and forwarding the control signal to an unmanned aerial vehicle; or receiving, by the mesh device, through the mesh network, feedback data sent by the unmanned aerial vehicle, and forwarding the feedback data to the controller.

As a result, the mesh device realizes forwarding of the control signal or the data through the mesh network. A communication distance between the controller and the unmanned aerial vehicle is increased, transmission power of the controller is reduced, endurance time of the controller is increased, and an antenna alignment requirement is reduced. Therefore, difficulty of operation is reduced, a problem of poor communication quality caused by an obstacle between the unmanned aerial vehicle and the controller and a problem of inconvenient expansion of the communication distance may be solved.

A communication method for unmanned aerial vehicle provided by the embodiments of the present disclosure includes: receiving, by an unmanned aerial vehicle, through a mesh network, a control signal forwarded by a mesh device, and performing a corresponding operation according to the control signal; or sending, by the unmanned aerial vehicle, feedback data through the mesh network.

As a result, the unmanned aerial vehicle receives the control signal or sends the data through the mesh network, and be flexibly networked with the other devices, so as to facilitate the communication system to realize functions of one controller to multiple unmanned aerial vehicles and multiple controllers to one unmanned aerial vehicle.

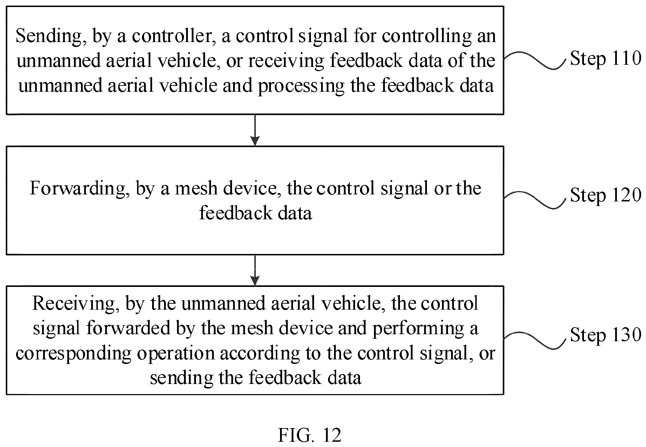

FIG. 12 is a flowchart of a communication method for an unmanned aerial vehicle according to an embodiment of the present disclosure. The method may be applied in the communication system for unmanned aerial vehicle provided by the embodiments of the present disclosure. The communication system for unmanned aerial vehicle includes at least one controller, at least one unmanned aerial vehicle and a mesh device. As shown in FIG. 12, the communication method provided by the embodiments of the present disclosure includes the following steps.

Step 110: sending, by a controller, a control signal for controlling an unmanned aerial vehicle, or receiving feedback data of the unmanned aerial vehicle and processing the feedback data.

Step 120: forwarding, by a mesh device, the control signal or the feedback data.

Step 130: receiving, by the unmanned aerial vehicle, the control signal forwarded by the mesh device and performing a corresponding operation according to the control signal, or sending the feedback data. The controller, the unmanned aerial vehicle and the mesh device serve as mesh nodes, respectively, and the mesh nodes communicate with each other through a mesh network in a form of a wireless network.

Optionally, the mesh device includes at least one of a RTK base station, an unmanned aerial vehicle, a repeater and a controller.

Optionally, transmission power of different types of the mesh nodes is different.

Optionally, transmission power of the controller is less than a first set power threshold, transmission power of the unmanned aerial vehicle and/or the mesh device is greater than a second set power threshold, and the first set power threshold is less than the second set power threshold.

Optionally, heights of the mesh nodes are different.

Optionally, when there is an obstacle between the controller and the unmanned aerial vehicle, a height of the mesh device is greater than a height of the obstacle.

Optionally, antenna devices of different types of the mesh nodes are different.

Optionally, gain of an antenna device of the controller is less than a first set gain value, gain of an antenna device of the unmanned aerial vehicle and/or the mesh device is greater than a second set gain value, and the first set gain value is less than the second set gain value.

Optionally, an antenna device of the controller is an omnidirectional antenna.

Optionally, the number of the at least one controller is one, the number of the at least one unmanned aerial vehicle is one, and the mesh device includes a RTK base station or a repeater.

Optionally, the number of the at least one controller is one, the number of the at least one unmanned aerial vehicle is at least two, and the mesh device includes a RTK base station or a repeater.

Optionally, the number of the at least one controller is at least two, the number of the at least one unmanned aerial vehicle is one, and the mesh device includes a RTK base station or a repeater.

Optionally, the number of the at least one controller is at least two, the number of the at least one unmanned aerial vehicle is at least two, and the mesh device includes a RTK base station or a repeater.

Optionally, the number of the at least one controller is one, the number of the at least one unmanned aerial vehicle is one, and the number of the mesh device is at least three.

Optionally, the mesh device includes a RTK base station, a repeater and an unmanned aerial vehicle.

Optionally, at least one of the at least one unmanned aerial vehicle, the at least one controller and the mesh device is a device with a network backhaul function.

The device with the network backhaul function is configured to receive an access request from another device and access a server according to the access request, and forward feedback data of the server to the another device, and the another device includes any device of the system except the device with the network backhaul function.

Optionally, the device with the network backhaul function includes a mesh network module, a gateway and a backhaul link module.

The backhaul link module includes a backhaul link.

The gateway is configured to route and forward data between the mesh network module and the backhaul link module.

Optionally, the number of the at least one controller is at least two, the number of the at least one unmanned aerial vehicle is at least two, and the mesh device includes the device with the network backhaul function.

On the basis of the embodiments mentioned above, the method may further include the following steps.

Delete, by the mesh node, routing information of a neighbor node, when the mesh node may not detect a set signal sent by the neighbor node. The neighbor node refers to a node directly communicating with the mesh node. Establish, by the mesh node, a communication link with a target device and add routing information of the target device, if the mesh node detects a measurement signal sent by the target device.

A failure of the mesh node to detect the neighbor node may be caused by a fact that the neighbor node has completed a task, or power is exhausted, or other situations.

Therefore, by adding routing information of a newly-added device, mutual communication between the newly-added device and an original device may be realized. By deleting the routing information of the device, mutual communication between the remaining devices may not be affected.

In the technical solutions provided by the embodiments of the present disclosure, by means of combining the unmanned aerial vehicle, the controller and the mesh device into the mesh network, the unmanned aerial vehicle, the controller and the mesh device being communicated through the mesh network, the transmission power of the controller is reduced, the endurance time of the controller is increased, and the antenna alignment requirement is reduced. Therefore, the difficulty of operation is reduced, so as to facilitate the communication system to realize the functions of one controller to multiple unmanned aerial vehicles and multiple controllers to one unmanned aerial vehicle. The problem of poor communication quality caused by the obstacle between the unmanned aerial vehicle and the controller and the problem of inconvenient expansion of the communication distance may be solved.

## Claims

1. A communication system for unmanned aerial vehicle, comprising at least one controller, at least one unmanned aerial vehicle and a mesh device,
wherein the controller, the unmanned aerial vehicle and the mesh device serve as mesh nodes, respectively, and the mesh nodes communicate with each other through a mesh network.

2. The system of claim 1, wherein the mesh device comprises at least one of a RTK base station, an unmanned aerial vehicle, a repeater and a controller.

3. The system of claim 1, wherein transmission power of different types of the mesh nodes is different.

4. The system of claim 3, wherein transmission power of the controller is less than a first set power threshold, transmission power of the unmanned aerial vehicle and/or the mesh device is greater than a second set power threshold, and the first set power threshold is less than the second set power threshold.

5. The system of claim 1, wherein heights of the mesh nodes are different.

6. The system of claim 5, wherein when there is an obstacle between the controller and the unmanned aerial vehicle, a height of the mesh device is greater than a height of the obstacle.

7. The system of claim 1, wherein antenna devices of different types of the mesh nodes are different.

8. The system of claim 7, wherein gain of an antenna device of the controller is less than a first set gain value, gain of an antenna device of the unmanned aerial vehicle and/or the mesh device is greater than a second set gain value, and the first set gain value is less than the second set gain value.

9. The system of claim 7, wherein an antenna device of the controller is an omnidirectional antenna.

10. The system of claim 2, wherein the number of the at least one controller is one, the number of the at least one unmanned aerial vehicle is one, and the mesh device comprises the RTK base station or the repeater.

11. The system of claim 2, wherein the number of the at least one controller is one, the number of the at least one unmanned aerial vehicle is at least two, and the mesh device comprises the RTK base station or the repeater.

12. The system of claim 2, wherein the number of the at least one controller is at least two, the number of the at least one unmanned aerial vehicle is one, and the mesh device comprises the RTK base station or the repeater.

13. The system of claim 2, wherein the number of the at least one controller is at least two, the number of the at least one unmanned aerial vehicle is at least two, and the mesh device comprises the RTK base station or the repeater.

14. The system of claim 2, wherein the number of the at least one controller is one, the number of the at least one unmanned aerial vehicle is one, and the number of the mesh device is at least three.

15. The system of claim 14, wherein the mesh device comprises the RTK base station, the repeater and the unmanned aerial vehicle.

16. The system of claim 1, wherein at least one of the at least one unmanned aerial vehicle, the at least one controller and the mesh device is a device with a network backhaul function;
the device with the network backhaul function is configured to receive an access request from another device and access a server according to the access request, and forward feedback data of the server to the another device, and the another device comprises any device of the system except the device with the network backhaul function.

17. The system of claim 16, wherein the device with the network backhaul function comprises a mesh network module, a gateway and a backhaul link module;
the backhaul link module comprises a backhaul link; and
the gateway is configured to route and forward data between the mesh network module and the backhaul link module.

18. The system of claim 16, wherein the number of the at least one controller is at least two, the number of the at least one unmanned aerial vehicle is at least two, and the mesh device comprises the device with the network backhaul function.

19. A communication system for unmanned aerial vehicle, comprising at least one controller, at least one unmanned aerial vehicle and another device,
wherein the at least one controller is communicated with the another device through a mesh network, and the another device and the at least one unmanned aerial vehicle form a star network.

20. The system of claim 19, wherein the another device comprises a device with a mesh function and an access point AP function, and the unmanned aerial vehicle has a station STA function.

21. The system of claim 19 or 20, wherein the another device comprises at least one of a RTK base station, an unmanned aerial vehicle, a repeater and a controller.

22. The system of claim 21, further comprising a third-party device with a mesh function,
wherein the third-party device, the at least one controller and the another device communicate through the mesh network.

23. A communication method for unmanned aerial vehicle, comprising:
sending, by a controller, a control signal for controlling an unmanned aerial vehicle through a mesh network; or
receiving, feedback data of the unmanned aerial vehicle through the mesh network, and processing the feedback data.

24. A communication method for unmanned aerial vehicle, comprising:
receiving, by a mesh device, through a mesh network, a control signal sent by a controller, and forwarding the control signal to an unmanned aerial vehicle; or
receiving, by the mesh device, through the mesh network, feedback data sent by the unmanned aerial vehicle, and forwarding the feedback data to the controller.

25. A communication method for unmanned aerial vehicle, comprising:
receiving, by an unmanned aerial vehicle, through a mesh network, a control signal forwarded by a mesh device, and performing a corresponding operation according to the control signal; or
sending, by the unmanned aerial vehicle, feedback data through the mesh network.

26. A communication method for unmanned aerial vehicle, comprising:
sending, by a controller, a control signal for controlling an unmanned aerial vehicle, or receiving feedback data of the unmanned aerial vehicle and processing the feedback data;
forwarding, by a mesh device, the control signal or the feedback data; and
receiving, by the unmanned aerial vehicle, the control signal forwarded by the mesh device and performing a corresponding operation according to the control signal, or sending the feedback data,
wherein the controller, the unmanned aerial vehicle and the mesh device serve as mesh nodes, respectively, and the mesh nodes communicate with each other through a mesh network.
